# EUROPÄISCHE PATENTANMELDUNG

(11) **EP 2 886 619 A1**
(43) Veröffentlichungstag der Anmeldung: **24.06.2015**
(21) Anmeldenummer: 13197829.8
(22) Anmeldetag: 17.12.2013
(51) Int. Cl.: C09D 133/12, B32B 27/30

(54) **Verbund mit verbesserter Haftung**

(71) Anmelder: Evonik Industries AG, 45128 Essen (DE)
(72) Erfinder: Theil, Alexander, 64354 Reinheim (DE); Schmidt, Arne, 64287 Darmstadt (DE); Schmidt, Jann, 64331 Weiterstadt (DE); Blumenschein Michael, 64625 Bensheim (DE); Wicker, Michael, 64342 Seeheim-Jugenheim (DE); Zietek, Michael, 64372 Ober-Ramstadt (DE); Schamke, Wolfgang, 64347 Griesheim (DE)

(57) **Zusammenfassung**

Die vorliegende Erfindung betrifft einen Verbund bestehend aus oder umfassend
a) eine Schicht aus extrudiertem oder spritzgegossenem PMMA, wobei das PMMA einen Anteil von mindestens 0,05 Gew.-%, vorzugsweise mindestens 0,075 Gew.-%, bevorzugt mindestens 0,1 Gew.-%, bezogen auf das Gesamtgewicht von a), an "Reaktiv-Monomeren" mit funktionellen Gruppen besitzt,
b) eine Schicht aus einem oder mehreren Dicht- und/oder Klebstoffen,
c) eine Substratschicht,
sowie ein Verfahren zu dessen Herstellung und die Verwendung von Silikon zum Verkleben von a) und c) sowie der Verwendung von a) zur Verbesserung der Verbundhaftung.

## Beschreibung

Die vorliegende Erfindung betrifft einen Verbund mit verbesserter Haftung und ein Verfahren zu dessen Herstellung.

### Hintergrund der Erfindung:

In der Fachwelt besteht seit langem das bekannte Problem, dass sich extrudiertes oder spritzgegossenes Acrylglas, insbesondere Polymethyl(meth)acrylat (= PMMA) und hier insbesondere PMMA - Platten, schwer mit anderen Substraten zu einem Verbund verbinden lassen ohne Verwendung eines thermischen Verfahrens. Das heißt, dass die Herstellung eines stabilen Verbundes aus extrudiertem oder spritzgegossenem Acrylglas, insbesondere PMMA, und anderen Substraten bei Vorliegen von Raumtemperatur aus dem Stand der Technik problematisch ist und dass bisher keine einfache Lösungsoption aufgezeigt wurde. Im Stand der Technik ist bisher lediglich bekannt, dass beispielsweise insbesondere für die Verbindung von extrudiertem oder spritzgegossenem Acrylglas, insbesondere von PMMA, mit einem Substrat unter Zuhilfenahme von Silikondichtstoffen eine annähernd gute Haftung nur mit speziellen zusätzlichen Verarbeitungsschritten (z.B.: Anschleifen derjenigen Oberfläche des Acrylglases, die mit dem Substrat mit Hilfe des Silikondichtstoffes verbunden werden soll) erreicht werden konnte.

Eine Haftungsproblematik bzw. eine schlechte Haftung bei Unterlassung dieser speziellen zusätzlichen Verarbeitungsschritte ist insbesondere zwischen extrudiertem oder spritzgegossenem Acrylglas bzw. PMMA und Silikon-Spritzmassen bekannt.

Im Stand der Technik wird somit nur dann eine annähernd gute Haftung erzielt, wenn eine nachträgliche Behandlung der Acrylglas-Oberfläche erfolgt, z.B. durch geeignete Primer (Haftvermittler) oder Aufrauhen der Oberfläche. Somit ist immer ein nachträglicher Arbeitsschritt notwendig. Zudem ist die erhaltene Haftung stark abhängig von der Art der Behandlung und/oder deren exakter Ausführung.

Im Stand der Technik ist weiter bekannt, dass eine Haftungsproblematik zu Silikondichtstoffen bei gegossenem Acrylglas/PMMA in der Regel nicht vorhanden ist.

Polymethyl(meth)acrylat ist bekannt für extreme Witterungsbeständigkeit und hohe mechanische Festigkeiten. Es ist damit im Eigenschaftsspektrum gut geeignet für Bauanwendungen.

### Aufgabe und Lösung

Ziel war es somit, einen Verbund bzw. ein Verbund-System zur Verfügung zu stellen, bei dem ein extrudiertes Acrylglas bzw. extrudiertes PMMA ohne weitere Behandlung und mit Hilfe von einem oder mehreren Dicht- und/oder Klebstoffen, insbesondere mit Hilfe eines auf Silikon basierenden Dicht- und/oder Klebstoffes oder eines entsprechenden Gemisches, mit einem Substrat verbunden werden kann, wobei der Verbund eine hervorragende Haftung aufzeigt. Insbesondere war es auch eine Aufgabe der vorliegenden Erfindung, das Verkleben von extrudiertem oder spritzgegossenem Acrylglas/PMMA mit sich selbst und mit anderen Materialien zu ermöglichen, beispielhaft sei die Fixierung von extrudiertem oder spritzgegossenem Acrylglas/PMMA an senkrechten Wänden mit hervorragender Haftung genannt.

Eine weitere Aufgabe bestand darin, einen Verbund zur Verfügung zu stellen, der den Heisswasserwechseltest nach DIN EN 14428 und DIN EN 263 besteht.

Eine zusätzliche Aufgabe bestand darin, ein Verfahren zur Verfügung zu stellen, durch das bei Raumtemperatur die erfindungsgemäßen Verbundsysteme erhalten werden können, wobei dieses Verfahren jedoch auf zusätzliche Arbeitsschritte wie Primern oder Aufrauhen verzichtet bzw. verzichten kann. Weiter war es Aufgabe, dass eine gleichbleibende Festigkeit über die gesamte Verbund-Oberfläche erhalten wird. Ebenso war es die Aufgabe, ein Verfahren zur Verfügung zu stellen, das einfach und vorzugsweise kostengünstig ist.

Diese Aufgaben sowie weitere, die zwar nicht explizit genannt werden, sich aber aus den hierin diskutierten Zusammenhängen ableiten lassen oder sich aus diesen ergeben, werden überraschend gelöst, durch einen erfindungsgemäßen Verbund bestehend aus oder umfassend
a) eine Schicht aus extrudiertem oder spritzgegossenem PMMA, wobei das PMMA einen Anteil von mindestens 0,05 Gew.-%, vorzugsweise mindestens 0,075 Gew.-%, bevorzugt mindestens 0,1 Gew.-%, bezogen auf das Gesamtgewicht von a), an "Reaktiv-Monomeren" mit funktionellen Gruppen besitzt,
b) eine Schicht aus einem oder mehreren Dicht- und/oder Klebstoffen, und
c) eine Substratschicht,
sowie dessen Herstellungsverfahren, das dadurch gekennzeichnet ist, dass es den Schritt umfasst:
- Verbinden einer Schicht a) aus extrudiertem oder spritzgegossenem PMMA, wobei das PMMA einen Anteil von mindestens 0,05 Gew.-%, vorzugsweise mindestens 0,075 Gew.-%, bevorzugt mindestens 0,1 Gew.-%, bezogen auf das Gesamtgewicht von a), an "Reaktiv-Monomeren" mit funktionellen Gruppen besitzt,
   mit Hilfe einer Schicht aus einem oder mehreren Dicht- und/oder Klebstoffen mit einer Substratschicht c).

### Kurze Beschreibung der Abbildungen:

Abbildung 1: erfindungsgemäßer Verbund mit a), b) und c) schematisch dargestellt
Abbildung 2: erfindungsgemäßer Verbund mit a), b), c) und d) schematisch dargestellt
Abbildung 3: erfindungsgemäßer Verbund mit a), b), c), d) und e) schematisch dargestellt
Abbildung 4: Teil eines erfindungsgemäßen Verbundes mit a), d) und e) schematisch in Relation zueinander dargestellt
Abbildung 5: Teil eines erfindungsgemäßen Verbundes mit a), d) und e), wobei Schicht e) der
Ausführungsform von Schicht a) entspricht, so dass dieser Teil den Aufbau a) - d) - a) besitzt
Abbildung 6: erfindungsgemäßer Verbund mit a), b) und c) schematisch dargestellt
   Bezugszeichenliste:
   1: a)
   2: b)
   3: c)
   4: Distanzschnur
Abbildung 7: 3 Verbunde A* (nicht erfindungsgemäß; Verbunde 1-3 von links) und 3 Verbunde B* (erfindungsgemäß; Verbunde 1-3 von rechts); Sicht von oben; um Schicht 2 sichtbar zu machen, wurde sie schematisch in den Vordergrund gerückt (in den realen Verbunden befindet sich die Schicht 2 zwischen der Schicht 1 oder 5 und der Schicht 3 (=c))
   Bezugszeichenliste:
   1: a)
   2: b)
   3: c)
   5: Schicht, gemäß nicht erfindungsgemäßem Beispiel A in einem nicht erfindungsgemäßen Verbund A*
Abbildung 8: erfindungsgemäßer Verbund B* bzw. nicht erfindungsgemäßer Verbund A* schematisch dargestellt mit angelegter Kraftwaage für die Bestimmung der Haftung
   Bezugszeichenliste:
   1: a)
   2: b)
   3: c)
   5: Schicht, gemäß nicht erfindungsgemäßen Beispiel A in einem nicht erfindungsgemäßen Verbund A*
   K = Kraftaufwendung (Gewichtskraft)
Abbildung 9: Fotografie der Verbunde gemäß Abbildung 7 und der angelegten Kraftwaage für die Bestimmung der Haftung
Abbildung 10: Fotografie der Versuchsergebnisse der Ablösung der Schichten 1 (bei den Verbunden B*, 1-3 von rechts) bzw. 5 (bei den Verbunden A*, 1-3 von links)

### Detaillierte Beschreibung der Erfindung:

Die vorliegende Erfindung stellt ein Verbund bestehend aus oder umfassend
a) eine Schicht aus extrudiertem oder spritzgegossenem PMMA, wobei das PMMA einen Anteil von mindestens 0,05 Gew.-%, vorzugsweise mindestens 0,075 Gew.-%, bevorzugt mindestens 0,1 Gew.-%, bezogen auf das Gesamtgewicht von a), an "Reaktiv-Monomeren" mit funktionellen Gruppen besitzt,
b) eine Schicht aus einem oder mehreren Dicht- und/oder Klebstoffen, und
c) eine Substratschicht
zur Verfügung.

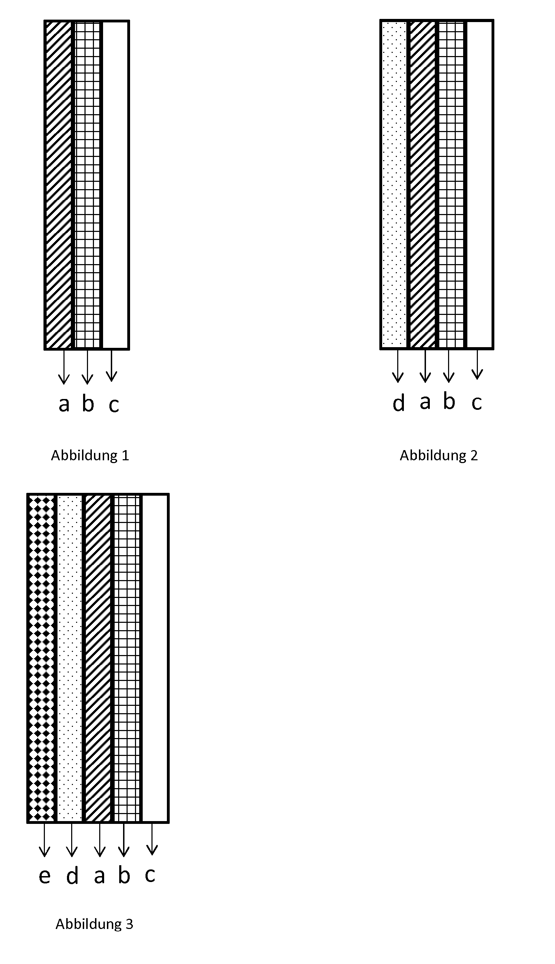

Ein erfindungsgemäßer Verbund ist schematisch dargestellt in Abbildung 1.

Weitere Ausführungsformen eines erfindungsgemäßen Verbundes, die im Folgenden weiter beschrieben werden, sind in den Abbildungen 2 bis 5 dargestellt.

Polymethyl(meth)acrylate (= PMMA) sind in der Fachwelt bekannt. Diese Polymere werden im Allgemeinen durch radikalische Polymerisation von Mischungen erhalten, die (Meth)acrylate enthalten. Der Ausdruck (Meth)acrylate umfasst Methacrylate und Acrylate sowie Mischungen aus beiden. Bevorzugte Polymethyl(meth)acrylate sind durch Polymerisation von Mischungen erhältlich, die mindestens 50 Gew.-%, insbesondere mindestens 60 Gew.-% und besonders bevorzugt mindestens 80 Gew.-%, jeweils bezogen auf das Gesamtgewicht der zu polymerisierenden Monomere, Methylmethacrylat aufweisen.

Eine Schicht aus extrudiertem oder spritzgegossenem PMMA gemäß a) eines erfindungsgemäßen Verbundes wird durch eine herkömmliche, an sich bekannte Extrusion oder an sich bekannten Spritzguss der durch radikalische Polymerisation der Monomere erhaltenen Formmasse zu einem Kunststoffformkörper, vorzugsweise einer Platte oder einer Folie, erhalten.

Unter, "Reaktiv-Monomeren" mit funktionellen Gruppen' werden im Sinne der vorliegenden Erfindung solche radikalisch polymerisierbaren Monomere verstanden, welche funktionelle Gruppen besitzen. Genannt seien als funktionale Gruppen beispielsweise die Amino-, insbesondere die Dialkylamino-, (cyclische) Amid-, Imid-, Hydroxy-, (Ep)Oxy-, Carboxyl- und die (Iso)Cyano-Gruppe. Derartige Monomere sind an sich bekannt (vgl. H. Rauch Puntigam, Th. Volker, Acryl- und Methacrylverbindungen, Springer-Verlag 1967; Kirk-Othmer, Encyclopedia of Chemical Technology, 3rd. Ed., Vol.1, pp. 394-400, J. Wiley 1978; DE-A 25 56 080; DE-A 26 34 003).

Vorzugsweise gehören die Monomere der Monomerklasse der stickstoffhaltigen Vinylheterocyclen mit vorzugsweise 5-Ringen neben 6-Ringen, und/oder der copolymerisierbaren vinylischen Carbonsäuren und/oder der Hydroxyalkyl-, Alkoxyalkyl-, Epoxy- und der Aminoalkyl-substituierten Ester oder Amiden der Fumar- oder Malein- bzw. Itacon- oder Acryl- und Methacrylsäure an.

Als Stickstoff-heterocyclische Monomere seien insbesondere solche aus der Klasse der Vinylimidazole, der Vinyllactame, der Vinylcarbazole und der Vinylpyridine genannt. Beispiele, die keinerlei Beschränkung darstellen sollen, für diese monomeren Imidazolverbindungen sind N-Vinylimidazol (auch Vinyl-1-imidazol genannt), N-Vinyl-methyl-2-imidazol, N-Vinyl-ethyl-2-imidazol, N-Vinyl-phenyl-2-imidazol, N-Vinyl-dimethyl-2,4-imidazol, N-Vinyl-benzimidazol, N-Vinylimidazolin (auch Vinyl-1-imidazolin genannt), N-Vinyl-methyl-2-imidazolin, N-Vinyl-phenyl-2-imidazolin und Vinyl-2-imidazol.

Als Beispiele für Monomere, die sich von den Lactamen ableiten, lassen sich insbesondere Verbindungen wie die folgenden anführen: N-Vinylpyrrolidon, N-Vinylmethyl-5-pyrrolidon, N-Vinylmethyl-3-pyrrolidon, N-Vinylathyl-5-pyrrolidon, N-Vinyldimethyl-5,5-pyrrolidon, N-Vinylphenyl-5-pyrrolidon, N-Allylpyrrolidon, N-Vinylthiopyrrolidon, N-Vinylpiperidon, N-Vinyldiathyl-6,6-piperidon, N-Vinylcaprolactam, N-Vinylmethyl-7 -caprolactam, N-Vinylathyl-7-caprolactam, N-Vinyldimethyl-7,7-caprolactam, N-Allylcaprolactam, N-Vinylcapryllactam.

Unter den Monomeren, die sich vom Carbazol ableiten, lassen sich insbesondere anführen: N-Vinylcarbazol, N-Allylcarbazol, N-Butenylcarbazol, N-Hexenylcarbazol und N-(Methyl-1-ethylen)carbazol. Unter den copolymerisierbaren vinylischen Carbonsäuren seien insbesondere die Maleinsäure, Fumarsäure, Itaconsäure bzw. geeignete Salze, Ester oder Amide derselben genannt.

Ferner seien die folgenden epoxy-, oxy- bzw. alkoxysubstituierten Alkylester der (Meth)acrylsäure angeführt: Glycidylmethacrylat, 2-Hydroxyethyl(meth)acrylat, 2 5 Hydroxypropyl(meth)acrylat, 2-Methoxy-ethyl(meth)acrylat, 2-Ethoxyethyl(meth)acrylat, 2-Butoxyethyl(meth)acrylat, 2-(2-Butoxyethoxy)ethylmeth-acrylat, 2-(Ethoxyethyloxy)ethyl(meth)acrylat, 4-Hydroxybutyl(meth)acrylat, 2-[2-(2-Ethoxy-ethoxy)ethoxy]-ethyl(meth)acrylat, 3-Methoxybutyl-1-(meth)acrylat, 2-Alkoxymethylethyl(meth)acrylat, 2-Hexoxyethyl(meth)acrylat.

Weiterhin seien die folgenden aminsubstituierten Alkylester der (Meth)acrylsäure genannt: 2-Dimethylaminoethyl(meth)acrylat, 2-Diethylaminoethyl-(meth)acrylat, 3-Dimethylamino-2,2-dimethylpropyl-1-(meth)acrylat, 3-Dimethylamino-2,2-dimethylpropyl-1-(meth)acrylat, 2-Morpholinoethyl(meth)-acrylat, 2-tert.Butylaminoethyl(meth)acrylat, 3-(Dimethylamino)propyl-(meth)acrylat, 2-(Dimethylaminoethoxyethyl)-(meth)acrylat.

Als Vertreter der (Meth)acrylamide seien beispielsweise die folgenden Monomere genannt:
N-Methyl(meth)acrylamid, N-Dimethylaminoethyl(meth)-acrylamid, N-Dimethylaminopropyl(meth)acrylamid, N-Isopropyl(meth)acrylamid, N-tert.Butyl(meth)acrylamid, N-Isobutyl(meth)acrylamid, N-Decyl(meth)acrylamid, N-Cyclohexyl(meth)acrylamid, N-[3-(Dil)lethylamino)2,2-dimethylpropyl]-methacrylamid, N-[2-Hydroxyethyl](meth)-acrylamid.
Vorteilhafterweise werden ,Reaktiv-Monomere" ausgewählt aus der Gruppe enthaltend GMA (Glycidylmethacrylat), Maleinsäurederivate, wie beispielsweise Maleinsäure, Maleinsäureanhydrid (MSA), Methylmaleinsäureanhydrid, Maleinimid, Methylmaleinimid, Maleinsäureamide (MSA), Phenylmaleinimid und Cyclohexylmaleinimid, Fumarsäurederivate, Methacrylsäureanhydrid, Acrylsäureanhydrid eingesetzt.
Überraschenderweise ist bei der Verwendung einer Schicht a) gemäß der obigen Beschreibung in einem erfindungsgemäßen Verbund eine nachträgliche Behandlung der Oberfläche von a), die über die Schicht b) mit dem Substrat c) in Verbindung gebracht wird, durch insbesondere Primer und/oder Aufrauhen nicht mehr nötig, um eine gute, vorzugsweise eine hervorragende, Haftung des Verbundes zu erzielen.

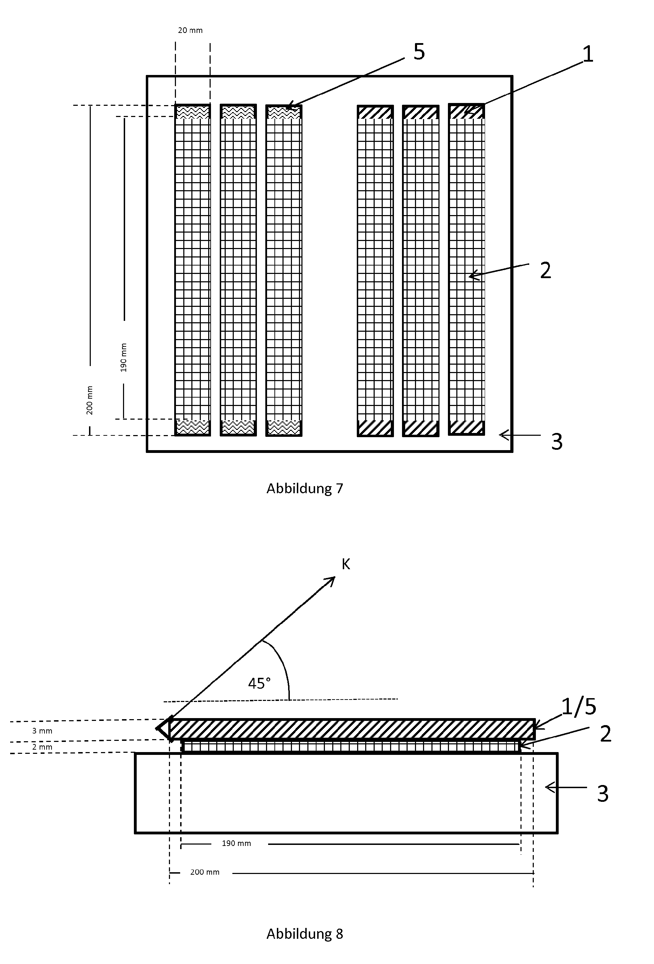

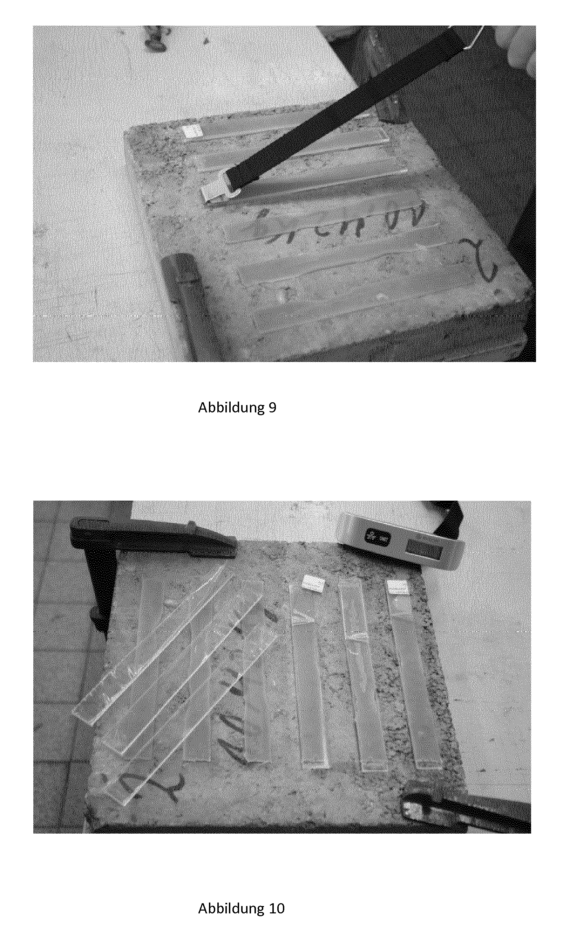

Unter einer guten, vorzugsweise hervorragenden, Haftung wird im Sinne der vorliegenden Erfindung eine Haftung verstanden, die bei einem Versuch, das extrudierte oder spritzgegossene PMMA, d.h. die Schicht a), mittels einer Kraftwaage von dem Substrat c) bzw. von der Klebeschicht b) wieder zu entfernen, wobei die Führung der Kraftwaage an einer Kante des extrudierten oder spritzgegossenen PMMAs eingehakt und anschließend unter einem Anzugswinkel von 45° eine Kraft aufgelegt wird (vgl. schematische Abbildung 8 und Abbildung 9), eine Kraftaufwendung entsprechend einer Gewichtsangabe der Kraftwaage von größer als 15 kg, vorzugsweise von größer als 20 kg, bevorzugt von größer als 25 kg, benötigt. Unter einer schlechten Haftung wird im Sinne der vorliegenden Erfindung eine Haftung verstanden, bei der bei dem obigen Versuch eine Lösung des extrudierten oder spritzgegossenen PMMAs, d.h. der Schicht a), von dem Substrat c) bzw. von der Klebeschicht b) zu erhalten, lediglich einen Kraftaufwand entsprechend einer Gewichtsangabe der Kraftwaage von unter 10 kg benötigt wird, wobei vorzugsweise das extrudierte oder spritzgegossene PMMA, d.h. die Schicht a), unbeschädigt, d.h. ungebrochen, von dem Substrat c) bzw. von der Klebeschicht b) entfernt werden kann. Die Haftungsqualität von Verbunden wird entsprechend im Rahmen der vorliegenden Erfindung mittels des unter den Meßmethoden noch näher beschriebenen Verfahrens geprüft.

Zudem ist es weiterhin überraschend, dass ein erfindungsgemäßer Verbund gemäß obiger Beschreibung den Heisswasserwechseltest nach DIN EN 14428 und DIN EN 263 besteht.

Vorzugsweise ist ein erfindungsgemäßer Verbund mit den oben definierten Schichten a), b) und c) dadurch gekennzeichnet, dass a) ein Thermoplast ist, welcher folgende Wiederholungseinheiten enthält:
A) 59,95 bis 99,95 Gew.-% einer Zusammensetzung Z bestehend aus
   a) 20 bis 100 Gew.-% Methylmethacrylat und
   b) 0 bis 80 Gew.-% mindestens eines von Methylmethacrylat verschiedenen (Meth)acrylats der Formel I, 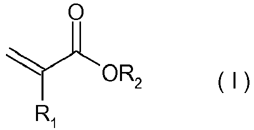 worin
      R1 für Wasserstoff oder Methyl und
      R2 für einen linearen oder verzweigten Alkylrest oder Cycloalkylrest mit 1 bis 18 Kohlenstoffatomen oder für Phenyl oder Naphthyl steht,
      wobei sich die Gew.-%-Angaben von a) und b) auf das Gesamtgewicht der Zusammensetzung Z beziehen und a) und b) zusammen 100 Gew.-% ergeben,
B) mindestens 0,05 Gew.-%, vorzugsweise mindestens 0,075 Gew.-%, bevorzugt mindestens 0,1 Gew.-%, eines oder mehrerer ethylenisch ungesättigter von A) unterschiedlicher mit A) copolymerisierbarer "Reaktiv-Monomere",
   und
C) 0 bis 40 Gew.-% mindestens eines weiteren von A) und B) verschiedenen mit diesen jedoch copolymerisierbaren ungesättigten Monomers,
   wobei A) bis C) zusammen 100 Gew.-% ergeben, und zu 100 Gew.-Teilen dieser Mischung
   übliche Zuschläge in Mengen von 0 bis 20 Gew.-Teilen zugesetzt sein können.

Das heisst, dass die Schicht a) über eine Polymerisation einer Mischung enthaltend:
A) 59,95 bis 99,95 Gew.-% einer Zusammensetzung Z bestehend aus
   a) 20 bis 100 Gew.-% Methylmethacrylat und
   b) 0 bis 80 Gew.-% mindestens eines von Methylmethacrylat verschiedenen (Meth)acrylats der Formel I, 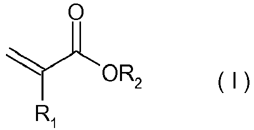 worin
      R1 für Wasserstoff oder Methyl und
      R2 für einen linearen oder verzweigten Alkylrest oder Cycloalkylrest mit 1 bis 18 Kohlenstoffatomen oder für Phenyl oder Naphthyl steht,
      wobei sich die Gew.-%-Angaben von a) und b) auf das Gesamtgewicht der Zusammensetzung Z beziehen und a) und b) zusammen 100 Gew.-% ergeben,
B) mindestens 0,05 Gew.-%, vorzugsweise mindestens 0,075 Gew.-%, bevorzugt mindestens 0,1 Gew.-%, eines oder mehrerer ethylenisch ungesättigter von A) unterschiedlicher mit A) copolymerisierbarer "Reaktiv-Monomere",
   und
C) 0 bis 40 Gew.-% mindestens eines weiteren von A) und B) verschiedenen mit diesen jedoch copolymerisierbaren ungesättigten Monomers,
wobei A) bis C) zusammen 100 Gew.-% ergeben, und zu 100 Gew.-Teilen dieser Mischung übliche Zuschläge in Mengen von 0 bis 20 Gew.-Teilen zugesetzt sein können,
hergestellt wird.

Bei der vorliegenden Erfindung sind unter "üblichen Zuschlägen" beispielsweise übliche Zusatz-, Hilfs-und/oder Füllstoffe, wie z.B. Thermostabilisatoren, UV-Stabilisatoren, UV-Absorber, Antioxidantien und/oder Farbmittel, Pigmente, organische Farbstoffe oder Polyamid, Polyether, Polyester, Polycarbonate, Netzmittel, weitere Stabilisatoren, Verlaufsmittel, Treibmittel, Calciumcarbonat (Kreide), Titandioxid, Calciumoxid, Perlit, gefällte und gecoatete Kreiden als rheologisch wirksame Additive, ferner ggf. Thixotropierungsmittel wie z. B. pyrogene Kieselsaure zu verstehen. Bevorzugt sind nicht mehr als 10 Gew.-Teile, besonders bevorzugt nicht mehr als 5 Gew.-Teile, insbesondere nicht mehr als 2 Gew.-Teile übliche Zuschläge zu 100 Gew.-Teilen der Mischung A) bis C) zugesetzt.

In einer bestimmten Ausführungsform des erfindungsgemäßen Verbundes sind auch gar keine üblichen Zuschläge der Mischung A) bis C) zugesetzt.

Weiter erfindungsgemäß bevorzugt ist zum einen, dass die Bestandteile A) bis C) von a) als Copolymerisat vorliegen. Das heisst, dass die Bestandteile A) bis C) und gegebenenfalls übliche Zuschläge zusammen ein und demselben Polymerisationsschritt unterworfen werden und im Ergebnis eine Formmasse erhalten wird, die durch herkömmliche, an sich bekannte Extrusion zu einem Kunststoffformkörper, vorzugsweise einer Platte oder einer Folie, weiterverarbeitet werden kann, die einer Schicht a) des erfindungsgemäßen Verbundes entspricht.

Somit ist eine bevorzugte Ausführungsform des erfindungsgemäßen Verbundes ein Verbund, bei dem A) bis C) von a) als Copolymerisat vorliegen.

Zum anderen ist erfindungsgemäß weiter bevorzugt, dass die Bestandteile A) bis C) von a) als Mischung bzw. Polymerblend aus Homo- und/oder Copolymerisaten vorliegen.

Das heisst, dass die Bestandteile A) bis C) ganz oder teilweise getrennten Polymerisationsschritten unterworfen werden können und im Ergebnis durch Zusammenmischen der einzelnen erhaltenen Homo- und/oder Copolymerisate eine Formmasse erhalten wird, die den obigen Angaben zu den Wiederholungseinheiten von a) entspricht und die durch herkömmliche, an sich bekannte Extrusion zu einem Kunststoffformkörper, vorzugsweise einer Platte oder einer Folie, weiterverarbeitet werden kann, die einer Schicht a) des erfindungsgemäßen Verbundes entspricht.

Als Bestandteil C) werden erfindungsgemäß bevorzugt Polymere eingesetzt, die die Eigenschaften der Schicht a) im erfindungsgemäßen Verbund modifizieren können. Hierzu gehören unter anderem, PVF, PVDF, ASA, Polyacrylnitrile, Polystyrole und Polyvinylchloride. Diese Polymere können einzeln oder als Mischung eingesetzt werden, wobei auch Copolymere, die von den zuvor genannten Polymeren ableitbar sind, beigefügt werden können. Zu diesen gehören insbesondere Styrol-Acrylnitril-Polymere (SAN). Besonders bevorzugte Styrol-Acrylnitril-Polymere können durch die Polymerisation von Mischungen erhalten werden, die aus 70 bis 92 Gew.-% Styrol, 8 bis 30 Gew.-% Acrylnitril und 0 bis 22 Gew.-% weiterer Comonomere, jeweils bezogen auf das Gesamtgewicht der zu polymerisierenden Monomere für die Styrol-Acrylnitril-Polymere, bestehen.

Weiter sind von der Erfindung ebenso die Ausführungsformen umfasst, bei der eine Formmasse, die unabhängig von ihrer Herstellungsweise, die Anforderungen erfüllt, dass sie folgende Wiederholungseinheiten enthält:
A) 59,95 bis 99,95 Gew.-% einer Zusammensetzung Z bestehend aus
   a) 20 bis 100 Gew.-% Methylmethacrylat und
   b) 0 bis 80 Gew.-% mindestens eines von Methylmethacrylat verschiedenen (Meth)acrylats der Formel I, 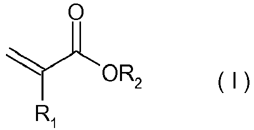 worin
      R1 für Wasserstoff oder Methyl und
      R2 für einen linearen oder verzweigten Alkylrest oder Cycloalkylrest mit 1 bis 18 Kohlenstoffatomen oder für Phenyl oder Naphthyl steht,
   wobei sich die Gew.-%-Angaben von a) und b) auf das Gesamtgewicht der Zusammensetzung Z beziehen und a) und b) zusammen 100 Gew.-% ergeben,
B) mindestens 0,05 Gew.-%, vorzugsweise mindestens 0,075 Gew.-%, bevorzugt mindestens 0,1 Gew.-%, eines oder mehrerer ethylenisch ungesättigter von A) unterschiedlicher mit A) copolymerisierbarer "Reaktiv-Monomere",
   und
C) 0 bis 40 Gew.-% mindestens eines weiteren von A) und B) verschiedenen mit diesen jedoch copolymerisierbaren ungesättigten Monomers,
wobei A) bis C) zusammen 100 Gew.-% ergeben. Zu 100 Gew.-Teilen dieser Formmasse bzw. Mischung können übliche Zuschläge in Mengen von 0 bis 20 Gew.-Teilen hinzugegeben werden, bevor sie durch herkömmliche, an sich bekannte Extrusion zu einem Kunststoffformkörper, vorzugsweise einer Platte oder einer Folie, weiterverarbeitet wird, die einer Schicht a) des erfindungsgemäßen Verbundes entspricht.

Somit ist ebenso eine bevorzugte Ausführungsform des erfindungsgemäßen Verbundes ein Verbund, bei dem A) bis C) von a) als Mischung aus Homo- und/oder Copolymerisaten vorliegen.

Eine weiter bevorzugte Ausführungsform des erfindungsgemäßen Verbundes, vorzugsweise gemäß einer vorherig bevorzugten Ausführungsform, ist dadurch gekennzeichnet, dass a) eine farblose oder farbige Schicht ist. Insbesondere bevorzugt ist, wenn a) eine farbige Schicht ist.

In einer weiteren erfindungsgemäßen Ausführungsform des Verbundes können zudem die Schichten b) und c) unabhängig voneinander und unabhängig von der Schicht a) farblos oder farbig sein.

Eine ebenso bevorzugte Ausführungsform des erfindungsgemäßen Verbundes ist dadurch gekennzeichnet, dass a) transparent, transluzent oder opak ist. Bei weiteren erfindungsgemäßen Ausführungsformen sind die Schichten b) und c) unabhängig voneinander und unabhängig von der Schicht a) transparent, transluzent oder opak.

In einer ganz besonders bevorzugten Ausführungsform des erfindungsgemäßen Verbundes ist die Schicht b) ein Silikonklebstoff, vorzugsweise ein neutral vernetzendes Silikon. Vorzugsweise besteht die Schicht b) aus mindestens einem Silikonklebstoff oder einer Mischung von zwei oder mehreren Silikonklebstoffen. Von der Erfindung umfasst ist ebenfalls, wenn die Schicht b) auf einem oder mehreren Silikonklebstoffen basiert. In diesem Fall können der Schicht b) noch weitere Additive und/oder Hilfsstoffe zugesetzt sein. Diese Additive und/oder Hilfsstoffe liegen vorzugsweise in einem Gewichtsanteil bezogen auf das Gesamtgewicht der Schicht b) von nicht mehr als 10 Gew.-%, bevorzugt von nicht mehr als 5 Gew.-%, weiter bevorzugt von nicht mehr als 1 Gew.-%, vor. Typische Additive und/oder Hilfsstoffe in Silikonklebstoffen sind Farbstoffe, UV-Absorber.

Erfindungsgemäß besonders bevorzugt ist ein Verbund, vorzugsweise nach einem der obigen bevorzugten Ausführungsformen, bei dem die Schicht b) keinen zusätzlichen Haftvermittler enthält. Silikonklebstoffe sind dem Fachmann hinlänglich bekannt. Silikondichtstoffe lassen sich einteilen in die Acetatsysteme, Amin/Aminoxysysteme, Oximsysteme, Benzamidsysteme und Alkoxysysteme. Oximsysteme sind neutral aushärtende, d.h. vernetzende Systeme. Alkoxysysteme sind eine der jüngeren Entwicklungen auf dem Gebiet der feuchtigkeitshärtenden Silikone. Sie spalten niedere Alkohole ab und riechen daher beim Aushärten kaum wahrnehmbar.

Weiter erfindungsgemäß bevorzugt ist ein essigsäurefreies, neutral vernetzendes Silikon, z.B. ein Natursteinsilikon (z.B.: OTTO SEAL^{®} S 72, das eine Alkoxy-Basis gemäß Herstellerangabe besitzt). Vorzugsweise ist das für die Schicht b) eingesetzte Silikon transparent.

In Versuchen konnte gezeigt werden, dass die Haftung von OTTO SEAL^{®} S 72 auf dem nicht erfindungsgemäß einzusetzenden PLEXIGLAS^{®} XT Farblos 0A000 ungenügend ist. Dies verdeutlicht beispielhaft die schon oben erwähnte Haftungsproblematik bzw. die schlechte Haftung zwischen PMMA und insbesondere Silikon-Spritzmasse bei Unterlassung der speziellen ebenfalls oben erwähnten zusätzlichen Verarbeitungsschritte.

In einer weiteren Ausführungsform des erfindungsgemäßen Verbundes ist die Schicht b) ein Montagekleber oder basiert auf einem Montagekleber. Dem Fachmann sind die folgenden Montagekleber-Systeme bekannt:
a) Hybridpolymer-Montageklebstoffe
b) Dispersions- und wasserbasierte Montagekleber
c) Polyurethan-Montageklebstoffe

In einer weiteren Ausführungsform des erfindungsgemäßen Verbundes ist c) eine Schicht gemäß a) oder ein anorganisches Substrat oder ein organisches Substrat. Wenn c) eine Schicht gemäß a) ist, ist es erfindungsgemäß bevorzugt, wenn c) einer wie schon oben beschriebenen bevorzugten Ausführungsform von a) entspricht. Ebenso sind von der Erfindung Ausführungsformen umfasst, bei denen die Schicht c) einer Ausführungsform von a) entspricht, wobei die Ausführungsform von a), die c) ist, nicht die gleiche Ausführungsform von a) in diesem speziellen Verbund sein muss. So kann z.B. die Schicht a) farbig sein und die Schicht c) einer Schicht a) gemäß obiger Definition entsprechen, jedoch farblos sein.

In einer ganz besonders bevorzugten Ausführungsform des erfindungsgemäßen Verbundes entspricht Schicht c) der Ausführungsform von a), so dass die Schichten a) und c) in diesem Verbund gleich sind.

In einer weiter besonders bevorzugten Ausführungsform des erfindungsgemäßen Verbundes ist c) eine Wand oder eine tragende Unterkonstruktion, und vorzugsweise ist c) ausgewählt aus der Gruppe bestehend aus den folgenden besonders gut geeigneten Untergründen und Trägermaterialien:
- Gipsbauplatten, vorzugsweise wasserfest,
- Spanplatten, vorzugsweise lackiert und/oder feuchtigkeitsbeständig,
- M.D.F.-Platten, vorzugsweise lackiert,
- Fliesenspiegel, vorzugsweise festsitzend,
- Putzwand, vorzugsweise mit Haftgrund behandelt,
- Stein-(Ziegel, Kalksandstein) Wand oder Betonwand, vorzugsweise mit Latexfarbe gestrichen.

Es werden besonders gute Ergebnisse erzielt, wenn die Schicht c), d.h. der Untergrund bzw. der Träger gegen eindringende Feuchtigkeit vorbehandelt ist (z.B. auf der Fläche mit flüssiger Folie oder Dichtschlämme; im Eckbereich mit Dichtband und Abdichtungsecken; bei Durchführungen mit Dichtmanschetten).

Erfindungsgemäß weiter bevorzugt ist ein Verbund, vorzugsweise nach einer der vorherigen bevorzugten Ausführungsformen, wobei die der Schicht b) zugewandte Oberfläche von c) eine hervorragende Silikonhaftung besitzt. Dies ist besonders vorteilhaft, wenn als Schicht b) ein Silikonklebstoff, vorzugsweise ein neutral vernetzendes Silikon vorhanden ist oder die Schicht b) auf einem oder mehreren Silikonklebstoffen basiert.

Eine weitere Ausführungsform des erfindungsgemäßen Verbundes (schematisch dargestellt in Abbildung 2) ist dadurch gekennzeichnet, dass auf der verbundabgewandten Seite von a) eine weitere Schicht d) aufgebracht ist, wobei d) vorzugsweise thermoplastisch ist. Diese Ausführungsform ist.

Die Schicht d) kann in einem erfindungsgemäßen Verbund eine farblose oder farbige Schicht sein.

Erfindungsgemäß bevorzugt ist ein Verbund, vorzugsweise nach einer der vorherigen bevorzugten Ausführungsformen, wobei die Schicht d) ein extrudiertes oder spritzgegossenes, thermoplastisches PMMA ist oder eine PMMA-Basis hat.

Weiter ist es bevorzugt, dass die Schicht d) eines erfindungsgemäßen Verbundes auf einer thermoplastischen PMMA-Formmasse aus Methyl(meth)acrylat mit einer Zusammensetzung von bis zu 6 Gew.-% vinylischen Comonomeren und einem mittleren Molekulargewicht M_{w} von 130.000 bis 190.000 g/mol basiert, ohne dass hierdurch eine Einschränkung erfolgen soll. Das mittlere Molekulargewicht M_{w} (Gewichtsmittel) wird im Rahmen der vorliegenden Erfindung über die Größenausschlusschromatographie (GPC) bestimmt, wobei der Fachmann geeignete PMMA-Standards verwendet.

Weiter kann die Schicht d) im Rahmen der vorliegenden Erfindung transparent, transluzent oder opak sein.

Eine bevorzugte Ausführungsform des erfindungsgemäßen Verbundes, die zusätzlich zu den wie oben definierten Schichten a), b) und c) eine weitere wie beschriebene Schicht d) enthält, ist weiter bevorzugt dadurch gekennzeichnet, dass auf der verbundabgewandten Seite von d) eine weitere Schicht e) aufgebracht ist (schematisch dargestellt in Abbildung 3), wobei e) vorzugsweise thermoplastisch ist.

Insbesondere ist es erfindungsgemäß bevorzugt, wenn die Schicht e) hergestellt wurde aus einer entstaubten PMMA-Formmasse.

Eine weiter bevorzugte Ausführungsform des erfindungsgemäßen Verbundes, vorzugsweise gemäß zumindest einer der vorherig bevorzugten Ausführungsformen, ist dadurch gekennzeichnet, dass die Schicht a) entstaubt vorliegt. Besonders bevorzugt ist es erfindungsgemäß, wenn sowohl die Schicht a) als auch die Schicht e) entstaubt vorliegt und insbesondere ist es bevorzugt, wenn die Schicht e) der Schicht von a) in Dicke und/oder Zusammensetzung entspricht.

Weiter sind von der Erfindung ebenso die Ausführungsformen umfasst, vorzugsweise nach einer der obigen bevorzugten Ausführungsformen, bei der die Schicht e) eine farblose oder farbige Schicht ist. Insbesondere bevorzugt ist, wenn e) eine farblose Schicht ist.

Weiter kann die Schicht e) im Rahmen der vorliegenden Erfindung transparent, transluzent oder opak sein.

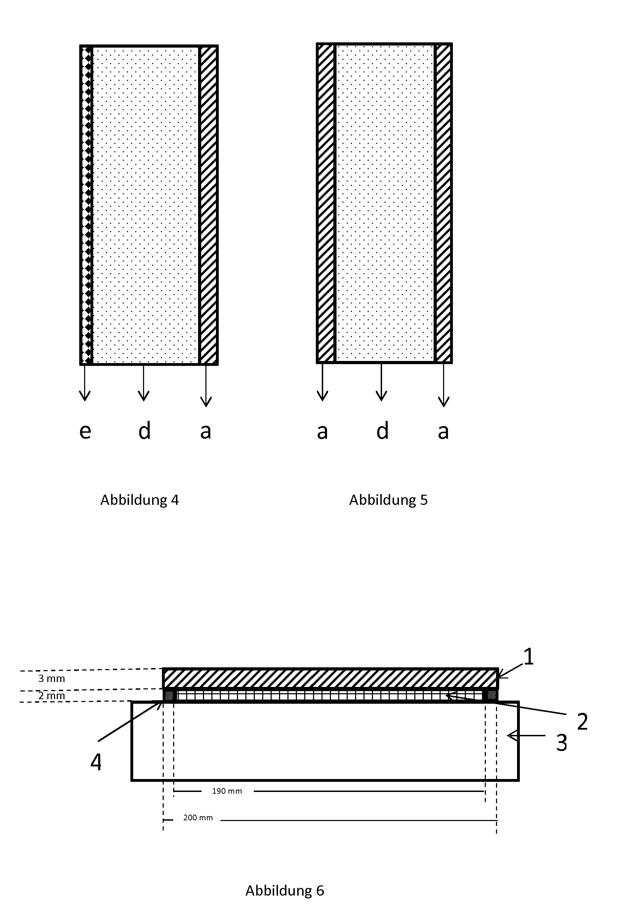

In einer weiteren Ausführungsform des erfindungsgemäßen Verbundes ist e) eine Schicht gemäß a). Dies ist schematisch für diesen Teil eines erfindungsgemäßen Verbundes in Abbildung 5 dargestellt, bei der die Schicht a) zweimal vorhanden ist: die "rechte Schicht a)", die als zwingender Bestandteil eines erfindungsgemäßen Verbundes vorhanden ist und in dieser Ausführungsform auf der verbundzugewandten Seite mit der Schicht b) (in Abbildung 5 nicht gezeigt) und auf der verbundabgewandten Seite mit der Schicht d) verbunden ist und die "linke Schicht a)", die die über die Schicht d) mit der "rechten Schicht a)" verbunden ist und ggf. die abschließende Oberfläche bildet sofern sie nicht weiter beschichtet ist. Wenn e) eine Schicht gemäß a) ist, ist es erfindungsgemäß weiter bevorzugt, wenn e) einer wie schon oben beschriebenen bevorzugten Ausführungsform von a) entspricht. Ebenso sind von der Erfindung Ausführungsformen umfasst, bei denen die Schicht e) einer Ausführungsform von a) entspricht, wobei die Ausführungsform von a), die e) ist, nicht die gleiche Ausführungsform von a) in diesem speziellen Verbund sein muss. So kann z.B. die Schicht a) farbig sein und die Schicht e) einer Schicht a) gemäß obiger Definition entsprechen, jedoch farblos sein.

In einer ganz besonders bevorzugten Ausführungsform des erfindungsgemäßen Verbundes entspricht Schicht e) der Ausführungsform von a), so dass die Schichten a) und e) in diesem Verbund in Dicke und/oder Zusammensetzung gleich sind (schematisch dargestellt in Abbildung 5). In bestimmten Ausführungsformen des erfindungsgemäßen Verbundes sind die Schichten a) und e) in diesem Verbund in Dicke und Zusammensetzung gleich.

Sofern im Rahmen der vorliegenden Erfindung eine oder mehrere Schichten farbig sind, wird vorzugsweise die Färbung durch Farbmittel bzw. Farbmittelmischungen erzielt, die zur Variation und Abstimmung der Farbe eingesetzt werden. Diese Farbmittel können sowohl IR-reflektierend, wie z.B. Titandioxid, als auch IR-durchlässig sein. Bei den Farbmitteln kann es sich darüber hinaus um organische Farbstoffe oder um weitere organische bzw. anorganische Pigmente, bzw. auch um Mischungen daraus handeln.

Der Anteil dieser in den Schichten enthaltenen Farbmittel kann zwischen 0 und 3,0 Gew.-%, bevorzugt zwischen 0,5 und 2,5 Gew.-% und besonders bevorzugt zwischen 1,0 und 2,0 Gew.-% bezogen auf das Gesamtgewicht der jeweiligen Schicht betragen.

In einer weiteren Ausführungsform des erfindungsgemäßen Verbundes ist die verbundabgewandte Oberfläche von a), d) oder e) zusätzlich mit einer Kratzfestbeschichtung versehen.

Dem Fachmann sind Kratzfestbeschichtungen bekannt. Aus den bekannten Kratzfestbeschichtungen kann der Fachmann nach der gewünschten Verwendung des erfindungsgemäßen Verbundes geeignete Kratzfestbeschichtungen heraussuchen. Bestimmte Kratzfestbeschichtungen werden mittels UV-Strahlung ausgehärtet. Zusätzlich zu der verbundabgewandten Oberfläche von a), d) oder e) kann eine Kratzfestbeschichtung ebenfalls auf Oberflächen aufgetragen sein, die innerhalb des Verbundes liegen, d.h. z.B. zwischen den Schichten a) und d) oder zwischen den Schichten d) und e).

Erfindungsgemäß weiter bevorzugt ist ein Verbund, vorzugsweise nach einer der vorherigen bevorzugten Ausführungsformen, wobei der Verbund typischerweise eine Gesamtdicke von 12 mm - 350 mm aufweist, ohne dass hierdurch eine Einschränkung erfolgen soll.

Unabhängig voneinander und von der bevorzugten Gesamtdicke des Verbundes ist es erfindungsgemäß weiter bevorzugt, wenn a) und ggf. d) und ggf. e) eine Gesamtdicke von 1 mm bis ≤ 25 mm aufweisen.

Insbesondere ist es bevorzugt, wenn a) eine Dicke von 50 µm bis 25 mm, vorzugsweise 150 µm bis 10 mm, aufweist und/oder wenn d) eine Dicke von 0,9 mm bis 24,9 mm aufweist und/oder wenn e) eine Dicke von 50 µm bis 3 mm, vorzugsweise 100 µm bis 600 µm, aufweist. In Abbildung 4 sind beispielhaft für eine bevorzugte Ausführungsform die Dicken der Schichten a), d) und e) schematisch in Relation zueinander dargestellt.

In einer ganz besonders bevorzugten Ausführungsformen des erfindungsgemäßen Verbundes sind a), d) und e) coextrudiert, wobei a) eine Dicke von 300 µm hat und farbig ist, d) eine Dicke von 3,55 mm hat und farblos ist und e) eine Dicke von 150 µm hat und farblos und entstaubt ist (schematisch dargestellt in Abbildung 4).

In einer weiteren ganz besonders bevorzugten Ausführungsformen des erfindungsgemäßen Verbundes sind a), d) und e) coextrudiert, wobei a) eine Dicke von 300 µm hat und farbig ist, d) eine Dicke von 3,4 mm hat und farblos ist und e) eine Dicke von 300 µm hat und farbig ist (schematisch dargestellt in Abbildung 5; e) ist in dieser Abbildung 5 durch die zweite "linke Schicht a" repräsentiert).

In einer ebenso ganz besonders bevorzugten Ausführungsformen des erfindungsgemäßen Verbundes sind a), d) und e) coextrudiert, wobei a) eine Dicke von 150 µm hat und farblos und entstaubt ist, d) eine Dicke von 3,7 mm hat und farblos ist und e) eine Dicke von 150 µm hat und farblos und entstaubt ist, wobei e) vorzugsweise einer Schicht a) entspricht.

In weiter besonders bevorzugten Ausführungsformen des erfindungsgemäßen Verbundes sind a), d) und/oder e) coextrudiert, d.h. wurden durch einen Coextrusionsschritt hergestellt.

Ein weiterer Gegenstand der vorliegenden Erfindung betrifft ein Verfahren zur Herstellung eines erfindungsgemäßen Verbundes, vorzugsweise nach einer der obigen bevorzugten Ausführungsformen, wobei das Verfahren den Schritt umfasst:
- Verbinden einer Schicht a) gemäß zumindest einer der obigen Ausführungsformen mit Hilfe einer Dicht- und/oder Klebstoff-Schicht b) gemäß zumindest einer der obigen Ausführungsformen mit einer Substratschicht c) gemäß zumindest einer der obigen Ausführungsformen.

Vorzugsweise werden die Oberflächen der Schichten a) und c) vor dem In-Verbindung-Bringen mit der Dicht- und/oder Klebstoff-Schicht b) gereinigt. Die bevorzugten Reinigungsmittel sind dabei Petrolether und Ethanol.

Eine weitere Ausführungsform des erfindungsgemäßen Verfahrens ist dadurch gekennzeichnet, dass die Dicht- und/oder Klebstoff-Schicht b) nach dem Verbindungsschritt für mindestens 24 Stunden, vorzugsweise mindestens 36 Stunden, bevorzugt mindestens 48 Stunden, weiter bevorzugt für mindestens 4 Tage, ganz bevorzugt für mindestens 5 Tage, aushärtet.

Ein weiterer Gegenstand der vorliegenden Erfindung betrifft die Verwendung von Silikon, vorzugsweise neutral vernetzendem Silikon, zur Verklebung von einer Schicht a) gemäß zumindest einer der obigen Ausführungsformen mit einer Schicht c) gemäß zumindest einer der obigen Ausführungsformen. Es war für den Fachmann überraschend, dass insbesondere mit Silikon, vorzugsweise neutral vernetzendem Silikon, eine Verklebung einer Schicht a) gemäß zumindest einer der obigen Ausführungsformen mit einer Schicht c) gemäß zumindest einer der obigen Ausführungsformen zu einer besonders guten Verbundhaftung führte. Vor allem war es überraschend, dass bei der Haftungsprüfung bei der Verwendung von Silikon, vorzugsweise neutral vernetzendem Silikon, als Schicht b) ein Kraftaufwand entsprechend einer Gewichtsangabe der Kraftwaage von größer als 15 kg, vorzugsweise von größer als 20 kg, bevorzugt von größer als 25 kg, benötigt war, um die Schicht a) von dem Substrat c) bzw. von der Schicht b) zu entfernen.

Ein ebenso weiterer Gegenstand der vorliegenden Erfindung betrifft die Verwendung einer Schicht a) gemäß zumindest einer der obigen Ausführungsformen zur Verbesserung einer Verbundhaftung eines Verbundes umfassend zumindest die weiteren Schichten
b) eine Schicht aus einem oder mehreren Dicht- und/oder Klebstoffen, und
c) eine Substratschicht,
wobei b) die Schichten a) und c) verbindet. Die bezüglich der Verwendung von Silikon aufgeführten vorteilhaften Ergebnisse wurden auch bei der dargestellten Verwendung der Schicht a) festgestellt und waren ebenso unerwartet.

### Meßmethoden:

### Mittleres Molekulargewicht M_{w} (Gewichtsmittel)

Das mittlere Molekulargewicht M_{w} (Gewichtsmittel) im Rahmen der vorliegenden Erfindung wird über die Größenausschlusschromatographie (GPC) gemäß folgender Bedingungen bestimmt:

| Säulen: | 5 SDV-Säulen von Fa. PSS (Mainz) | |
|---|---|---|
| **Nr.** | **Typ** | **Dimension** |
| Vorsäule | SDV LinL | 10 µ 8x50mm |
| 1 | SDV LinL | 10 µ 8x300mm |
| 2 | SDV LinL | 10 µ 8x300mm |
| 3 | SDV 100 Å | 10 µ 8x300mm |
| 4 | SDV 100 Å | 10 µ 8x300mm |

| | | |
|---|---|---|
| Geräte | Agilent 1100er Serie, UV-Detektor G1314A | |
| | Agilent 1100er Serie, RI-Detektor G1362A | |
| | | |
| Säulenofen | T = 35 °C | |
| Eluent | Tetrahydrofuran für Polymer A) und Vergleichsbeispiel II | |
| | Tetrahydrofuran + 0,2 Vol-% Trifluoressigsäure für Polymer B) und Vergleichsbeispiel I | |
| Flußrate | 1 ml/min | |
| Injektionsvolumen | 100 µl | |
| | | |
| Detektion | RI | Temperierung 35 °C, |
| | | |
| Konzentration der Probelösung | 2 g/l (bei Mw > 10⁶: 1 ... 0,25 g/l) | |
| Standards | PMMA (z.B. Fa. PSS (Mainz) für Polymer A) und Vergleichsbeispiel I + II Polystyrol (z.B. Fa. PSS (Mainz) für Polymer B) | |
| Konzentration der Standardlösung | 1g/l (bei Mw > 10⁶: 0,5 g/l) | |
| Interner Standard | o-Dichlorbenzol --> 1 Tropfen/1,5 ml Autosampler-Vial | |

Wärmeformbeständigkeit: Vicat-Erweichungstemperatur VET; ISO 306-B50
Lösungsviskosität des granulierten Polymerisats: in Chloroform bei 25 °C; ISO 1628 - Teil 6

### Methode der Haftungsprüfung Verbund:

Bei der Herstellung der zu untersuchenden Verbunde ist auf eine ausreichende Aushärtung bzw. Aushärtungszeit der Dicht- und/oder Klebstoffe zu achten. Vorzugsweise ruht ein hergestellter Verbund 5 Tage bevor er der Haftungsprüfung unterzogen wird. Für die Prüfung wird unter Kraftaufwendung und Kraftbestimmung mittels einer Kraftwaage die Schicht a) bzw. die mit einem Substrat c) über eine Dicht- und/oder Klebstoff-Schicht b) verbundene Schicht entfernt. Dazu wird die Führung der Kraftwaage an einer Kante der Schicht a) bzw. der mit einem Substrat c) über eine Dicht- und/oder Klebstoff-Schicht b) verbundenen Schicht, eingehakt und anschließend unter einem Anzugswinkel von 45° eine Kraft aufgelegt (vgl. schematische Abbildung 8 und Bild Abbildung 9). Die Kraftaufwendung, die zu einem Ablösen (ggf. unter Brechen) der Schicht a) bzw. der mit einem Substrat c) über eine Dicht- und/oder Klebstoff-Schicht b) verbundenen Schicht, führt, wird ermittelt.

Die nachfolgenden Beispiele dienen der näheren Erläuterung und dem besseren Verständnis der vorliegenden Erfindung, schränken diese bzw. deren Umfang jedoch in keiner Weise ein.

### Beispiele

### Vergleichsbeispiel A:

Als Vergleichsbeispiel wurde ein Standard-PMMA untersucht. Das Standard-PMMA ist aufgebaut aus 96 Gew.-% Methylmethacrylat und 4 Gew.-% Methylacrylat. Dieses Standard-PMMA kann in Anlehnung an DE 44 40 219 A1 hergestellt werden mit:
95,305 Gew.-% Methylmethacrylat
4,000 Gew.-% Methylacrylat
0,310 Gew.-% n-Dodecylmercaptan
0,035 Gew.-% Dilauroylperoxid
0,030 Gew.-% ter.-Butylperisononanoat
0,300 Gew.-% Stearylalkohol
0,020 Gew.-% 2-(2'-Hydroxy-5'-methylphenyl) benzotriazol

Die Edukte werden dabei in Polyesterbeutel eingewogen, in einem Wasserbad polymerisiert und dann in einem Temperierofen getempert. Anschließend wird das Polymer gemahlen und über einen Extruder entgast.

Temperaturprofil für die Polymerisation im Wasserbad:
24h 60°C.

Temperaturprofil im Temperierofen:
6h bei 110°C.

Das erhaltene Molekulargewicht des Standard-PMMA beträgt M_{w}=149 000 g/mol gemessen mit der GPC-Methode.

Das Standard-PMMA hat eine Vicat-Erweichungstemperatur VET (ISO 306-B50) von 105°C.

Die Formmasse (obig erhaltenes Verfahrensprodukt) wurde auf einem Einschneckenextruder zu Platten mit den Maßen 3050 mm x 2050 mm x 3 mm verarbeitet. Aus solch einer Formatplatte wurden jeweils 3 Probekörper im Format 200 mm x 20 mm x 3 mm gesägt.

### Erfindungsgemäßes Beispiel B:

Es wurde eine Mischung aus drei Komponenten (Polymeren) I), II) und III) hergestellt, wobei die Mischung
- 59 Gew.-% der Komponente I),
- 40 Gew.-% der Komponente II) und
- 1 Gew.-% der Komponente III),
jeweils bezogen auf das Gesamtgewicht der Mischung, enthielt.

Im Folgenden wird die Herstellung/Bereitstellung der einzelnen Komponenten beschrieben:

### Komponente I):

Komponente I) ist aufgebaut aus 99 Gew.-% Methylmethacrylat und 1 Gew.-% Methylacrylat und kann in Anlehnung an DE 44 40 219 A1 hergestellt werden mit:
98,305 Gew.-% Methylmethacrylat
1,000 Gew.-% Methylacrylat
0,310 Gew.-% n-Dodecylmercaptan
0,035 Gew.-% Dilauroylperoxid
0,030 Gew.-% ter.-Butylperisononanoat
0,300 Gew.-% Stearylalkohol
0,020 Gew.-% 2-(2'-Hydroxy-5'-methylphenyl) benzotriazol

Die Edukte werden dabei in Polyesterbeutel eingewogen, in einem Wasserbad polymerisiert und dann in einem Temperierofen getempert. Anschließend wird das Polymer gemahlen und über einen Extruder entgast.

Temperaturprofil für die Polymerisation im Wasserbad:
24h 60°C.

Temperaturprofil im Temperierofen:
6h bei 110°C.

Das erhaltene Molekulargewicht der Komponente I) beträgt M_{w}=149 000 g/mol gemessen mit der GPC-Methode.

Die Komponente I) hat eine Vicat-Erweichungstemperatur VET (ISO 306-B50) von 108°C.

### Komponente II):

Als Komponente II) wurde eingesetzt: ein handelsübliches Copolymerisat (z.B. PLEXIGLAS^{®} 8N der Firma Evonik Industries AG) aus 99 Gew.-% Methylmethacrylat und 1 Gew.-% Methylacrylat mit einer Lösungsviskosität in Chloroform bei 25 °C (ISO 1628 - Teil 6) von etwa 53 ml/g.

### Komponente III):

Komponente III) wurde analog Beispiel B in Paragraph [0050] der EP 1742997 B1 (50 Gew.-% Copolymer (I) gemäß EP 1742997 B1 + 50 Gew.-% (Co)polymer (II) gemäß EP 1742997 B1) hergestellt.

(Co)polymer (I) gemäß EP 1742997 B1) enthält 10 Gew.-% Maleinsäureanhydrid. Hierdurch liegen in der Gesamt-Mischung aus den drei Komponenten I), II) und III) insgesamt 0,05 Gew.-% "Reaktiv-Monomere" mit funktionellen Gruppen vor.

Die drei Komponenten I), II) und III) wurden im Mischer gemischt.

Die Mischung aus den drei Komponenten I), II) und III) enthielt somit insgesamt als Bestandteile:
- 99,875 Gew.-% einer Mischung aus Methylmethacrylat und Methylacrylat mit einem Verhältnis Methylmethacrylat : Methylacrylat von 99 : 1 (entsprechend A) der Schicht a),
- 0,05 Gew.-% Maleinsäureanhydrid (entsprechend B) der Schicht a) und
- 0,075 Gew.-% Styrol (entsprechend C) der Schicht a),
jeweils bezogen auf das Gesamtgewicht der Mischung. Die Gesamt-Mischung enthielt somit 98,88 Gew.-% Methylmethacrylat und 0,995 Gew.-% Methylacrylat, jeweils bezogen auf das Gesamtgewicht der Mischung.

Somit entspricht eine aus dieser Mischung extrudierte oder spritzgegossene PMMA-Schicht der Schicht a) eines erfindungsgemäßen Verbundes.

Die erhaltene Mischung wurde dann entsprechend zu Platten im Format 200 mm x 100 mm x 3 mm thermoplastisch urgeformt. Aus diesen Platten wurden wie in Vergleichsbeispiel A ebenfalls jeweils 3 Probekörper im Format 200 mm x 20 mm x 3 mm gesägt.

### Herstellung der Verbunde A* (nicht erfindungsgemäß) und B* (erfindungsgemäß)

Als Substratschicht c) wurde eine Betonplatte verwendet. Die Betonplatte wurde mit einer Bürste gereinigt und anschließend mit Luft abgeblasen.

Auf der Betonplatte wurden insgesamt 6 begrenzte Freiflächen von 300 mm x 20 mm mittels Tesastreifen erzeugt. Auf die Betonplatte wurde in den Freiflächen die Kleblänge von 190 mm eingezeichnet. Damit die spätere Klebeschicht bei allen Prüfflächen gleich dick war, wurden im Abstand von 190 mm zwei Distanzschnüre (2 mm x 5 mm) parallel zueinander auf gelegt (vgl. Abbildung 6). Nacheinander wurde jede Freifläche für sich mit einem Silikonstreifen (OTTO SEAL^{®} S 72) belegt. Um die Klebeschicht vollflächig gleichmäßig zu verteilen, wurde der Streifen flächig mit dem aufgelegten Probekörper belastet und bis auf die Dichtung niedergedrückt. Das an den Seiten austretende Silikon wurde entfernt. Die Schichtdicke der Silikonschicht zwischen Betonplatte und aufgelegtem Probekörper betrug ca. 2 mm. Dies wurde insgesamt für alle 6 Freiflächen (für 3 mit gemäß Vergleichsbeispiel A hergestellten Probekörpern und für 3 mit gemäß erfindungsgemäßem Beispiel B hergestellten Probekörpern) durchführt. Dies führte zu 3 Verbunden A* (nicht erfindungsgemäß) und 3 Verbunden B* (erfindungsgemäß), vgl. Abbildung 7.

Anschließend wurden alle Tesastreifen und Distanzschnüre entfernt und alle hergestellten Verbunde ruhten 5 Tage (vgl. Abbildung 8). Am Tag 5 wurden die Probekörper mittels einer Kraftwaage entfernt. Dazu wurde die Führung der Kraftwaage an einer Kante eingehakt und anschließend unter einem Anzugswinkel von 45° eine Kraft aufgelegt (vgl. schematisch Abbildung 8 und Bild Abbildung 9).

Die gemäß Vergleichsbeispiel A hergestellten Probekörper ließen sich mit geringer Kraft leicht und an einem Stück von der Silikonschicht entfernen (vgl. Abbildung 10, Streifen 1-3 von links). Gemessen wurde eine Kraft entsprechend einer Gewichtsangabe der Kraftwaage von im Mittel lediglich 7 kg, die für eine Ablösung nötig waren.

Die gemäß erfindungsgemäßem Beispiel B hergestellten Probekörper ließen sich auch mit erhöhtem Kraftaufwand nicht an einem Stück entfernen. Bei allen 3 gemäß erfindungsgemäßem Beispiel B hergestellten Probekörpern kam es zum Bruch des Materials (vgl. Abbildung 10, Streifen 1-3 von rechts). Der bis zum Bruch aufgebrachte Kraftaufwand lag entsprechend einer Gewichtsangabe der Kraftwaage von im Mittel 28 kg.

Somit konnte gezeigt werden, dass nur die erfindungsgemäßen Verbunde B* eine hervorragende Haftung aufzeigten.

## Patentansprüche

1. Verbund bestehend aus oder umfassend
a) eine Schicht aus extrudiertem oder spritzgegossenem PMMA, wobei das PMMA einen Anteil von mindestens 0,05 Gew.-%, vorzugsweise mindestens 0,075 Gew.-%, bevorzugt mindestens 0,1 Gew.-%, bezogen auf das Gesamtgewicht von a), an "Reaktiv-Monomeren" mit funktionellen Gruppen besitzt,
b) eine Schicht aus einem oder mehreren Dicht- und/oder Klebstoffen,
c) eine Substratschicht.

2. Verbund nach Anspruch 1, **dadurch gekennzeichnet, dass** a) ein Thermoplast ist, welcher folgende Wiederholungseinheiten enthält:
A) 59,95 bis 99,95 Gew.-% einer Zusammensetzung Z bestehend aus
a) 20 bis 100 Gew.-% Methylmethacrylat und
b) 0 bis 80 Gew.-% mindestens eines von Methylmethacrylat verschiedenen (Meth)acrylats der Formel I, 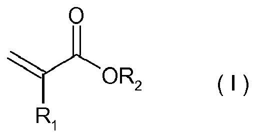 worin
R1 für Wasserstoff oder Methyl und
R2 für einen linearen oder verzweigten Alkylrest oder Cycloalkylrest mit 1 bis 18 Kohlenstoffatomen oder für Phenyl oder Naphthyl steht,
wobei sich die Gew.-%-Angaben von a) und b) auf das Gesamtgewicht der Zusammensetzung Z beziehen und a) und b) zusammen 100 Gew.-% ergeben,
B) mindestens 0,05 Gew.-%, vorzugsweise mindestens 0,075 Gew.-%, bevorzugt mindestens 0,1 Gew.-%, eines oder mehrerer ethylenisch ungesättigter von A) unterschiedlicher mit A) copolymerisierbarer "Reaktiv-Monomere",
und
C) 0 bis 40 Gew.-% mindestens eines weiteren von A) und B) verschiedenen mit diesen jedoch copolymerisierbaren ungesättigten Monomers,
wobei A) bis C) zusammen 100 Gew.-% ergeben, und zu 100 Gew.-Teilen dieser Mischung übliche Zuschläge in Mengen von 0 bis 20 Gew.-Teilen zugesetzt sein können.

3. Verbund nach Anspruch 2, **dadurch gekennzeichnet, dass** A) bis C) von a) als Copolymerisat vorliegen.

4. Verbund nach Anspruch 2, **dadurch gekennzeichnet, dass** A) bis C) von a) als Mischung aus Homo- und/oder Copolymerisaten vorliegen.

5. Verbund nach zumindest einem der vorherigen Ansprüche, **dadurch gekennzeichnet, dass** die Schicht b) ein Silikonklebstoff ist, vorzugsweise ein neutral vernetzendes Silikon.

6. Verbund nach zumindest einem der vorherigen Ansprüche, **dadurch gekennzeichnet, dass** c) eine Schicht gemäß a) oder ein anorganisches Substrat oder ein organisches Substrat ist.

7. Verbund nach zumindest einem der vorherigen Ansprüche, **dadurch gekennzeichnet, dass** auf der verbundabgewandten Seite von a) eine weitere Schicht d) aufgebracht ist, wobei d) vorzugsweise thermoplastisch, bevorzugt ein thermoplastisches PMMA, ist.

8. Verbund nach Anspruch 7, **dadurch gekennzeichnet, dass** d) auf einer thermoplastischen PMMA-Formmasse aus MMA mit einer Zusammensetzung von bis zu 6 Gew.-% vinylischen Comonomeren und einem mittleren Molekulargewicht M_{w} von 130.000 bis 190.000 g/mol basiert.

9. Verbund nach zumindest einem der Ansprüche 7 und 8, **dadurch gekennzeichnet, dass** auf der verbundabgewandten Seite von d) eine weitere Schicht e) aufgebracht ist, wobei e) vorzugsweise thermoplastisch ist.

10. Verbund nach Anspruch 9, **dadurch gekennzeichnet, dass** e) hergestellt wurde aus entstaubter PMMA Formmasse.

11. Verbund nach zumindest einem der vorherigen Ansprüche, **dadurch gekennzeichnet, dass** die verbundabgewandte Oberfläche von a), d) oder e) zusätzlich mit einer Kratzfestbeschichtung versehen ist.

12. Verbund nach zumindest einem der vorherigen Ansprüche, **dadurch gekennzeichnet, dass** a) und gegebenenfalls d) und gegebenenfalls e) eine Gesamtdicke von 1 mm bis ≤ 25 mm aufweist/aufweisen.

13. Verfahren zur Herstellung eines Verbundes gemäß zumindest einem der Ansprüche 1 bis 12, **dadurch gekennzeichnet, dass** es den Schritt umfasst:
- Verbinden einer Schicht a) gemäß zumindest einem der vorherigen Ansprüche mit Hilfe einer Dicht- und/oder Klebstoff-Schicht b) gemäß zumindest einem der vorherigen Ansprüche mit einer Substratschicht c) gemäß zumindest einem der vorherigen Ansprüche.

14. Verwendung von Silikon, vorzugsweise neutral vernetzendem Silikon, zur Verklebung von einer Schicht a) gemäß zumindest einem der vorherigen Ansprüche mit einer Schicht c) gemäß zumindest einem der vorherigen Ansprüche.

15. Verwendung einer Schicht a) gemäß zumindest einem der vorherigen Ansprüche zur Verbesserung einer Verbundhaftung eines Verbundes umfassend die weiteren Schichten
b) eine Schicht aus einem oder mehreren Dicht- und/oder Klebstoffen, und
c) eine Substratschicht,
wobei b) die Schichten a) und c) verbindet.
